(19) Europäisches Patentamt / European Patent Office / Office européen des brevets

(11) **EP 2 858 327 B1**

(12) **FASCICULE DE BREVET EUROPEEN**

(45) Date de publication et mention
de la délivrance du brevet:
**04.03.2020 Bulletin 2020/10**

(51) Int Cl.:
*H04L 29/06* *(2006.01)* *H04M 3/56* *(2006.01)*

(21) Numéro de dépôt: **14187833.0**

(22) Date de dépôt: **06.10.2014**

(54) **PROCÉDÉ DE MISE EN OEUVRE D'UNE SESSION DE COMMUNICATION ENTRE UNE PLURALITÉ DE TERMINAUX**

VERFAHREN ZUR DURCHFÜHRUNG EINER KOMMUNIKATIONSSESSION ZWISCHEN EINER MEHRZAHL VON ENDGERÄTEN

METHOD FOR IMPLEMENTING A COMMUNICATION SESSION AMONG A PLURALITY OF TERMINALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2013 FR 1359692**

(43) Date de publication de la demande:
**08.04.2015 Bulletin 2015/15**

(73) Titulaire: **Orange**
**75015 Paris (FR)**

(72) Inventeurs:
• **Cazéaux, Stéphane**
**14280 Authie (FR)**
• **Bertin, Emmanuel**
**14530 Luc sur Mer (FR)**

(56) Documents cités:
WO-A1-2011/149359 WO-A2-2008/020928
US-A1- 2012 013 705 US-B1- 6 453 336

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le domaine des communications. Plus précisément l'invention se rapporte à la mise en œuvre de services de communication, tels que par exemple un service de conférence ou un service de diffusion de flux de données multimédia.

Des services connus de conférence entre terminaux sont basés sur l'utilisation d'une plate-forme de conférence, appelée également pont de conférence.

Lors d'une étape préalable de réservation d'une conférence, un utilisateur se connecte au service de conférence et obtient un identifiant de conférence. L'utilisateur communique ensuite l'identifiant de conférence aux utilisateurs invités à la conférence. L'identifiant de conférence est en général un numéro de connexion à un pont de conférence. Il peut également être complété d'un mot de passe.

Au moment prévu pour la conférence, chaque participant se connecte au pont de conférence en utilisant l'identifiant de conférence.

Le pont de conférence gère dans le réseau les flux à destination des terminaux connectés à la conférence. En particulier, chaque terminal envoie un flux au pont. Le pont agrège les flux reçus et retransmet à chaque terminal connecté à la conférence, un flux unique correspondant aux flux agrégés reçus des autres terminaux connectés. La contribution du terminal vers lequel le pont de conférence retransmet le flux est omise. Ainsi, si N terminaux sont connectés au pont de conférence, chacun des N terminaux envoie un flux au pont de conférence et reçoit de celui-ci un flux agrégé des N-1 autres terminaux connectés.

Ce système nécessite des ressources importantes au niveau du pont de conférence, ou plus généralement au niveau de l'équipement du réseau en charge de l'agrégation et de la transmission des flux.

Le document US 2012/ 0013705 divulgue un procédé d'établissement d'une conférence entre plusieurs terminaux dans un système comprenant un pont de conférence et une pluralité de terminaux dans lequel chaque terminal émetteur envoie un flux adapté aux possibilités de restitution de chaque terminal receveur, la qualité de ce flux étant la meilleure possible.

Un des buts de l'invention est de remédier à des insuffisances/inconvénients de l'état de la technique et/ou d'y apporter des améliorations.

L'invention vient améliorer la situation.

A cet effet, l'invention se rapporte à un procédé d'initialisation d'une session de communication entre une pluralité de terminaux conforme à la revendication 1.

Le procédé d'initialisation d'une session de communication comprend notamment les étapes suivantes, mises en œuvre par un serveur :

- obtention de données de capacité pour au moins un desdits terminaux, lesdites données de capacité obtenues pour un terminal étant relatives à la capacité du terminal à recevoir et/ou émettre simultanément plusieurs flux ;

- détermination, en fonction desdites données de capacité obtenues, d'un ensemble d'au moins un canal de transmission de flux à établir entre des entités d'un groupe d'entités comprenant lesdits terminaux, chaque canal de transmission de flux dudit ensemble étant à établir entre une première entité et une deuxième entité du groupe soit directement, soit indirectement au travers d'au moins une troisième entité dudit groupe servant de relais de communication entre la première entité et la deuxième entité;

- transmission à au moins une dite première entité dudit groupe, d'au moins un identifiant d'entité en vue de l'établissement d'au moins un canal de transmission de flux dudit ensemble.

En fonction de sa capacité, un terminal est apte à traiter en temps réel un ou plusieurs flux de données. Il est notamment apte à émettre et/ou à recevoir simultanément un ou plusieurs flux de données multimédia, le nombre de flux dépendant du terminal. Le serveur prend en compte des données de capacité obtenues pour un ou plusieurs terminaux pour déterminer un ensemble d'au moins un canal de transmission de flux à établir pour mettre en œuvre une session de communication entre une pluralité de terminaux. Les canaux de transmission sont à établir entre les entités d'un groupe d'entités comprenant les terminaux et chaque canal relie une première et une deuxième entité du groupe soit directement soit indirectement au travers d'une ou plusieurs entités du groupe. Un tel canal de transmission est soit un canal reliant deux terminaux, soit un canal reliant un terminal et un autre dispositif, par exemple un dispositif de communication. Le serveur communique ensuite aux entités devant établir un canal, un identifiant d'une entité avec laquelle le canal doit être établi.

Le procédé permet ainsi de déterminer de façon centralisée le ou les canaux de transmission de flux à établir pour mettre en œuvre la session de communication. En fonction de la capacité d'un ou plusieurs terminaux à supporter un ou plusieurs flux, il peut décider de l'établissement d'au moins certains canaux entre terminaux. Ceci permet d'alléger la charge, voir de supprimer l'utilisation d'un dispositif de communication.

Selon un mode de réalisation particulier du procédé d'initialisation, l'étape de détermination dudit ensemble de canaux comprend les étapes de :

- calcul, à partir des données de capacité obtenues, d'un nombre NF de canaux de transmission de flux pouvant être établis entre lesdits terminaux pour ladite session de communication;

- calcul d'un nombre NC de canaux de transmission de flux nécessaires pour relier entre eux tous les terminaux de la pluralité ;

- comparaison dudit nombre NF de canaux de transmission de flux pouvant être établis entre lesdits terminaux et dudit nombre NC de canaux de transmission de flux nécessaires ;

et ledit ensemble de canaux de transmission de flux comprend NC canaux de transmission de flux reliant directement deux terminaux de la pluralité si le nombre NF de canaux de transmission de flux pouvant être établis entre lesdits terminaux est supérieur ou égal audit nombre NC de canaux de transmission de flux nécessaires.

Si le nombre de canaux pouvant être établis entre les terminaux est supérieur à un nombre de canaux nécessaires pour mettre en œuvre la session de transmission de flux, le ou les canaux à établir sont des canaux entre les terminaux de la pluralité.

Il n'est pas nécessaire dans ce cas d'utiliser un dispositif de communication. Par exemple, il n'est pas nécessaire d'utiliser un pont de conférence si le service à mettre en œuvre est une session de conférence.

Selon une caractéristique de ce mode de réalisation du procédé d'initialisation, si le nombre NF de canaux de canaux de transmission de flux pouvant être établis entre lesdits terminaux est inférieur audit nombre NC de canaux de transmission de flux nécessaires, ledit ensemble de canaux de transmission de flux comprend au moins un canal de transmission de flux à établir entre un des terminaux et un dispositif de communication.

Dans le cas où tous les canaux nécessaires ne peuvent être des canaux entre terminaux, il est nécessaire de recourir à un dispositif de communication. Lorsque le recours à un dispositif de communication n'est utilisé que pour les canaux ne pouvant être établis entre terminaux, ceci permet d'alléger la charge du dispositif de communication et ainsi d'économiser les ressources du dispositif de communication.

Selon un mode de réalisation particulier du procédé d'initialisation, suite à la réception d'une notification de déconnexion d'un terminal de la pluralité, respectivement d'une demande de connexion d'un terminal supplémentaire, l'étape de détermination est réitérée avec un deuxième groupe d'entités comprenant les autres terminaux de la pluralité, respectivement avec un troisième groupe d'entités comprenant les terminaux de la pluralité et ledit terminal supplémentaire.

La réitération de l'étape de détermination en cours de session permet aux terminaux connectés de poursuivre la session et à un terminal supplémentaire de rejoindre une session en cours.

Selon une caractéristique particulière de ce mode de réalisation du procédé d'initialisation, lors la réitération de l'étape de détermination, les canaux reliant directement une première entité et une deuxième entité, déterminés lors d'une itération précédente sont maintenus si la première entité et la deuxième entité restent connectées.

Ceci permet de limiter le nombre de canaux à établir en cours de session. Ceci évite de perturber la session de communication en cours.

Selon un mode de réalisation particulier, le procédé d'initialisation comprend en outre une étape de détermination de canaux secondaires utilisés en cas de déconnexion d'un terminal.

Les canaux secondaires sont des canaux établis mais non utilisés dans un premier temps pour transmettre des flux.

A titre d'alternative, les canaux secondaires sont déterminés et non établis.

Les canaux secondaires sont des canaux de secours utilisés en remplacement de canaux rompus suite à une déconnection d'un terminal.

L'établissement de canaux secondaires dès le début d'une session permet au système de s'adapter rapidement au deuxième groupe de terminaux comprenant les terminaux restant connectés et évite une perte temporaire de transmission de flux.

Selon un mode de réalisation particulier du procédé d'initialisation, l'étape de transmission comprend la transmission à chaque terminal, d'informations relatives à chaque canal dudit ensemble, lesdites informations comprenant au moins un identifiant d'une première entité et un identifiant de deuxième entité.

Un terminal est ainsi avisé de l'ensemble de canaux à établir pour mettre en œuvre la session de communication. Ceci lui permet de commander l'établissement d'un ou plusieurs canaux mais également de contrôler s'il doit ou non accepter une demande d'établissement d'un canal provenant d'un autre terminal de la pluralité. Cela permet également au terminal de refuser une demande d'établissement de canal provenant d'un terminal qui n'est pas un terminal de la pluralité. En conséquence, cela évite à un terminal de recevoir un flux qui n'est pas un flux transmis dans le cadre de la session de communication.

Selon un mode de réalisation particulier du procédé d'initialisation l'étape de transmission comprend en outre la transmission à chaque terminal, de données de service relatives à au moins un terminal.

L'invention se rapporte également à un procédé d'accès à une session de communication entre une pluralité de terminaux, caractérisé en ce qu'il comprend des étapes suivantes, mises en œuvre par un terminal de ladite pluralité :

- réception d'au moins un identifiant d'au moins une entité avec laquelle établir au moins un canal de transmission de flux d'un ensemble d'au moins canal de transmission de flux à établir entre des entités d'un groupe d'entités comprenant lesdits terminaux, chaque canal de transmission de flux dudit ensemble étant à établir entre une première entité et une deuxième entité du groupe soit directement, soit indirectement au travers d'au moins une troisième entité dudit groupe servant de relais de communication entre la première entité et la deuxième entité, ledit ensemble étant déterminé en fonction de données de capacité obtenues pour au moins un desdits terminaux, lesdites données de capacité obtenues pour un terminal étant relatives à la capacité du terminal à recevoir et/ou émettre simultanément plusieurs flux ;

- établissement d'au moins un canal de transmission de flux avec ladite au moins une entité pour laquelle ledit au moins un identifiant a été reçu.

Le ou les canaux sont établis en fonction d'identifiants reçus par le terminal.

Grâce à l'établissement du ou des canaux, le terminal peut transmettre et/ou recevoir un ou plusieurs flux.

Selon un mode de réalisation particulier du procédé d'accès, l'étape d'établissement est suivie d'une étape de transmission, suite à obtention d'au moins un flux, dudit au moins un flux obtenu sur au moins un des canaux établis, un flux obtenu étant un flux en provenance d'un dispositif de capture de flux relié audit terminal ou un flux reçu d'une entité dudit groupe.

Selon un mode de réalisation particulier du procédé d'accès, ledit ensemble de canaux comporte au moins deux canaux impliquant ledit terminal et dans lequel un flux transmis sur un premier canal est un flux obtenu par agrégation d'au moins un flux obtenu via au moins un deuxième canal et d'un flux reçu d'un dispositif de capture de flux relié audit terminal.

Dans ce mode de réalisation, une partie de la charge d'agrégation est réalisée au niveau d'un terminal. Ceci permet d'alléger, voire de supprimer, la charge d'un dispositif de communication central.

Selon un mode de réalisation particulier du procédé d'accès, ledit ensemble de canaux comporte au moins trois canaux impliquant ledit terminal et dans lequel le flux transmis sur un des au moins trois canaux est un flux obtenu par agrégation des flux obtenus via les autres canaux.

L'invention se rapporte encore à un serveur conforme à la revendication 9.

Le serveur comporte :

- un module d'obtention de données de capacité pour au moins un terminal d'une pluralité de terminaux, lesdites données de capacité obtenues pour un terminal étant relatives à la capacité du terminal à recevoir et/ou émettre simultanément plusieurs flux ;
- un module de détermination, en fonction desdites données de capacité obtenues, d'un ensemble d'au moins un canal de transmission de flux à établir entre des entités d'un groupe d'entités comprenant lesdits terminaux, chaque canal de transmission de flux dudit ensemble étant à établir entre une première entité et une deuxième entité du groupe soit directement, soit indirectement au travers d'au moins une troisième entité dudit groupe servant de relais de communication entre la première entité et la deuxième entité;
- un module de transmission à au moins une dite première entité dudit groupe, d'au moins un identifiant d'entité en vue de l'établissement d'au moins un canal de transmission de flux dudit ensemble.

L'invention se rapporte encore à un produit programme d'ordinateur conforme à la revendication 10. Les revendications dépendantes divulgue des modes de réalisation préférés de l'invention.

L'invention se rapporte enfin à un produit programme d'ordinateur comprenant des instructions pour mettre en œuvre les étapes du procédé d'accès à une session de communication tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :

- la figure 1 est un schéma illustrant un système selon un mode de réalisation de l'invention,
- la figure 2 est un schéma bloc représentant un terminal apte à réaliser les étapes d'un procédé d'accès à une session de communication selon un mode de réalisation de l'invention,
- la figure 3 est un schéma bloc représentant un serveur apte à réaliser les étapes d'un procédé d'initialisation d'une session de communication selon un mode de réalisation de l'invention,
- la figure 4 est un organigramme illustrant les différentes étapes d'un procédé d'initialisation d'une session de communication et d'un procédé d'accès à une session de communication selon un premier mode de réalisation de l'invention,
- la figure 5 est un organigramme illustrant les différentes étapes d'un procédé d'initialisation d'une session de communication et d'un procédé d'accès à une session de communication selon un deuxième mode de réalisation de l'invention,
- la figure 6 est un premier exemple de graphe illustrant un ensemble de canaux déterminés en liaison avec le deuxième mode de réalisation,
- la figure 7 est un deuxième exemple de graphe illustrant un ensemble de canaux déterminés en liaison avec le deuxième mode de réalisation,
- la figure 8 est un organigramme illustrant les différentes étapes d'un procédé d'initialisation d'une communication et d'un procédé d'accès à une session de communication selon un troisième mode de réalisation de l'invention,
- la figure 9 est un graphe illustrant un ensemble de canaux déterminés en liaison avec le troisième mode de réalisation,
- la figure 10 est un schéma illustrant un système selon un mode de réalisation de l'invention,
- la figure 11 est un organigramme illustrant les différentes étapes d'un procédé d'initialisation d'une session de communication et d'un procédé d'accès à une session de communication selon un quatrième mode de réalisation de l'invention,

- la figure 12 est un organigramme illustrant les différentes étapes d'un procédé d'enregistrement d'une instance d'application selon un mode de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

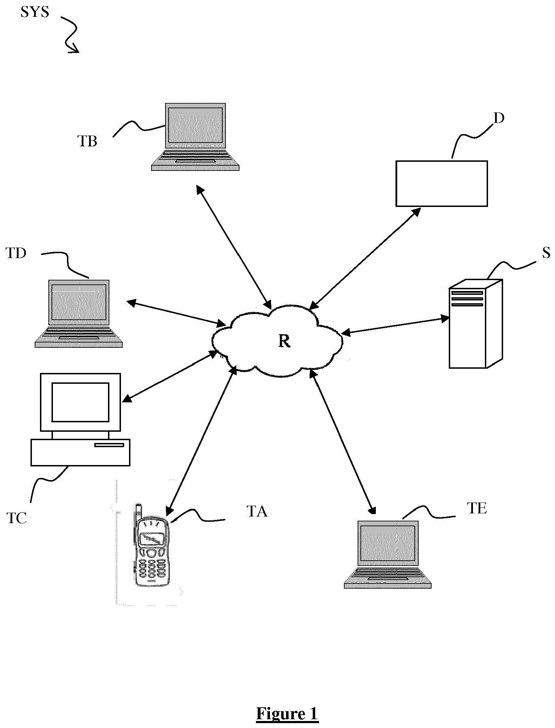

Un mode de réalisation d'un procédé d'initialisation d'une session de communication et d'un procédé d'accès à une session de communication, mis en œuvre dans le système SYS, va maintenant être décrit en référence aux figures 1 à 4.

En référence à la **figure 1**, un système SYS comprend plusieurs terminaux, par exemple cinq terminaux TA, TB, TC, TD et TE aptes à communiquer via un réseau de communication R avec un serveur distant, par exemple un serveur de gestion S.

Le système SYS comprend également un dispositif de communication D, par exemple un pont de conférence, apte à accéder au réseau de communication R.

A titre d'alternative, le système SYS comporte plusieurs dispositifs de communication.

Le terminal TA est par exemple un terminal mobile.

Les terminaux TB, TC, TD et TE sont par exemple des ordinateurs de type PC.

Plus généralement, chaque terminal TA, TB, TC, TD, TE est un équipement apte à accéder au réseau R et apte à émettre et à recevoir un ou plusieurs flux de données multimédias.

Un flux de données multimédia est par exemple un flux audio et/ou vidéo, un flux de données de type texte...

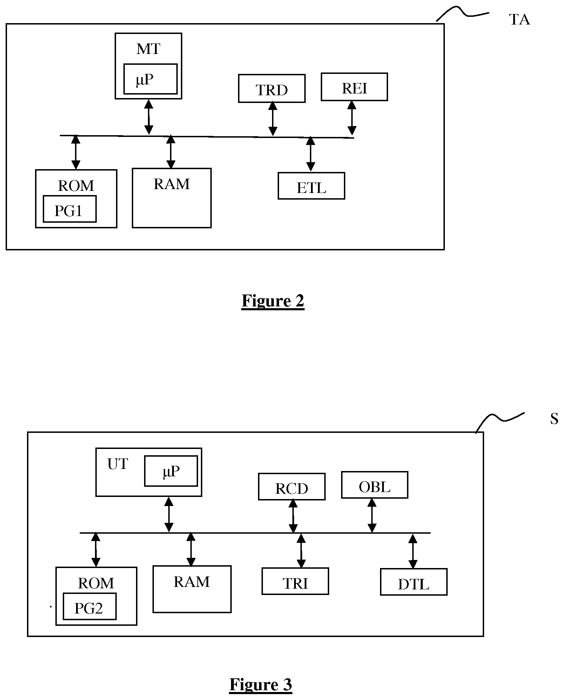

La **figure 2** représente un schéma bloc illustrant un terminal du système SYS, par exemple le terminal TA, selon un mode de réalisation.

Le terminal TA comporte de façon connue, notamment une unité de traitement MT équipée d'un microprocesseur, une mémoire morte de type ROM, une mémoire vive de type RAM. Le terminal TA peut comporter de manière classique et non exhaustive les éléments suivants: un clavier, un écran, un microphone, un haut-parleur, un lecteur de disque, un moyen de stockage...

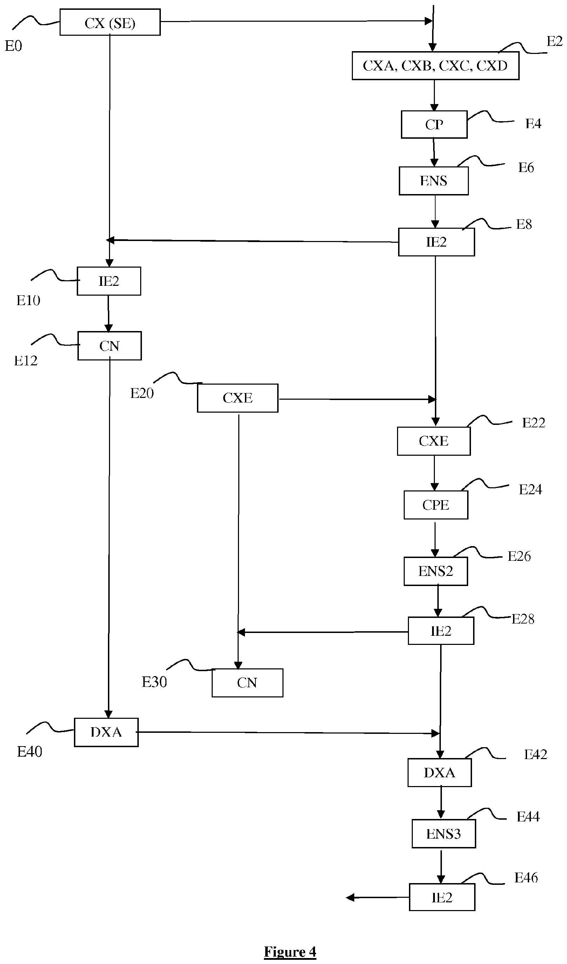

La mémoire morte de type ROM comporte des registres mémorisant un programme d'ordinateur PG1 comportant des instructions de programme adaptées à mettre en œuvre un procédé d'accès à une session de communication selon un mode de réalisation de l'invention décrit ultérieurement en référence à la figure 4.

Le terminal TA comporte également un module de transmission TRD, un module de réception REI et un module d'établissement de canal ETL.

La **figure 3** représente un schéma bloc illustrant un serveur de gestion S selon un mode de réalisation.

Le serveur de gestion S est par exemple un ordinateur et comporte de façon connue, notamment une unité de traitement UT équipée d'un microprocesseur, une mémoire morte de type ROM, une mémoire vive de type RAM.

La mémoire morte de type ROM comporte des registres mémorisant un programme d'ordinateur PG2 comportant des instructions de programme adaptées à mettre en œuvre un procédé d'initialisation d'une session de communication selon un mode de réalisation de l'invention décrit ultérieurement en référence à la figure 4.

Le serveur de gestion S comporte également un module de réception RCD, un module d'obtention OBL, un module de détermination DTL et un module de transmission TRI.

Un mode de réalisation d'un procédé d'initialisation d'une session de communication et d'un procédé d'accès à une session de communication, mis en œuvre dans le système SYS, va maintenant être décrit en référence à la **figure 4.**

La figure 4 illustre d'une part les étapes du procédé d'initialisation mises en œuvre par le serveur de gestion S et d'autre part les étapes du procédé d'accès mises en œuvre par le terminal TA et par le terminal TE.

Comme décrit dans la suite de la description, le procédé d'accès est également mis en œuvre par les terminaux TB, TC et TD.

Lors d'une étape E0, le module de transmission TRD de chaque terminal TA, TB, TC et TD envoie au serveur de gestion S une demande de connexion CX à une session SE de communication.

Les quatre terminaux TA, TB, TC et TD forment une pluralité de terminaux.

La session SE de communication est par exemple une session de conférence audio, une session de conférence audio/vidéo, une session de jeu en ligne, une session de diffusion de type IPTV (pour « Internet Protocol Télévision » en anglais)...

Chaque demande de connexion CX est reçue par le module de réception RCD du serveur de gestion S lors d'une étape E2.

Le serveur de gestion S reçoit dans le mode de réalisation décrit, quatre demandes de connexion CXA, CXB, CXC et CXD en provenance respectivement des terminaux TA, TB, TC et TD.

A titre d'alternative, la liste des terminaux devant participer à la session de communication est obtenue par le serveur de gestion S à partir d'une liste prédéterminée, par exemple une liste enregistrée préalablement dans une mémoire du serveur de gestion S. Dans ce cas, les étapes E0 et E2 ne sont pas réalisées.

Lors d'une étape E4, le module d'obtention OBL du serveur de gestion S obtient des données de capacité CP pour au moins un des terminaux pour lesquels il a reçu une demande de connexion.

Les données de capacité CP obtenues pour un terminal sont relatives à la capacité du terminal à traiter en temps réel des flux reçus ou émis simultanément par ledit terminal.

Dans le mode de réalisation décrit, chaque demande de connexion CXA, CXB, CXC et CXD contient des données de capacité du terminal ayant émis la demande.

L'étape d'obtention est dans ce cas une étape d'extraction desdites données de capacité reçues dans les demandes de connexion.

Par exemple, les données de capacité contenues dans une demande de connexion comprennent au moins un nombre de flux d'au moins un type prédéfini, par exemple, un flux audio/vidéo entrant et un flux audio/vidéo sortant ou un flux audio/vidéo bidirectionnel.

Le type d'un flux caractérise le type et le sens de transmission des données véhiculées dans le flux.

A titre d'alternative, au moins une demande de connexion ne contient pas de nombre de flux mais contient des données de capacité du terminal permettant d'obtenir au moins un nombre de flux d'au moins un type prédéfini. Les données de capacité sont par exemple la puissance du processeur (CPU pour « Central Processing Unit » en anglais), la bande passante disponible, le nombre de ports disponibles...

Egalement, à titre d'alternative, une ou plusieurs demandes de connexion comporte une indication permettant au serveur de gestion S d'obtenir des informations de capacité par consultation d'une base de données. Une telle indication est par exemple le type de terminal (mobile, ordinateur de type PC (pour « Personal Computer »)...), un identifiant du système d'exploitation...

Egalement, à titre d'alternative, seulement certains des terminaux fournissent des données de capacité. Dans ce cas, la capacité du terminal est estimée par le serveur de gestion S. Par exemple, la capacité du terminal est estimée à une ou plusieurs valeurs minimales en deçà desquelles le terminal ne peut accéder à la session. Par exemple, le nombre de flux supporté par chaque terminal n'ayant pas fourni de données de capacité est estimé à un flux audiovidéo bidirectionnel.

Egalement, à titre d'alternative, les données de capacité sont transmises par les terminaux au serveur de gestion S indépendamment de la demande de connexion, par exemple en réponse à une requête du serveur de gestion S.

Lors d'une étape E6, le module de détermination DTL du serveur de gestion S détermine un ensemble ENS de canaux de transmission de flux CN à établir entre des entités d'un groupe d'entités comprenant les terminaux TA, TB, TC et TD. Chaque canal est à établir entre une première entité du groupe et une deuxième entité du groupe.

A titre d'alternative, le groupe comprend un ou plusieurs dispositifs de communication.

Le nombre et le type des canaux de l'ensemble ENS dépend du service à mettre en œuvre, c'est-à-dire du type de la session SE.

A titre d'exemple dans le cas d'un service de conférence audio, les canaux à établir sont des canaux aptes à transporter des flux audio bidirectionnels et le nombre de canaux à établir est le nombre de canaux à établir pour mettre en relation tous les terminaux de sorte que chaque terminal est en relation avec chaque autre terminal soit directement soit par l'intermédiaire d'une entité intermédiaire servant de relais. L'entité intermédiaire est soit un des terminaux TA, TB, TC, TD pour lequel le serveur de gestion S a reçu une demande de connexion, soit le dispositif de communication D.

Egalement à titre d'exemple dans le cas d'un service de diffusion d'un flux TV, les canaux à établir sont des canaux aptes à transporter un flux audio-vidéo unidirectionnel, typiquement un flux TV, et le nombre de canaux à établir est le nombre de canaux à établir pour que chaque terminal reçoive le flux TV soit directement du dispositif de communication, soit d'un autre terminal.

L'ensemble ENS de canaux CN est déterminé en fonctions des données de capacité obtenues lors de l'étape E4.

Les données de capacité obtenues pour un terminal permettent de déterminer la capacité du terminal à traiter simultanément des flux entrants ou sortants. Elles permettent en conséquence de déterminer un nombre de canaux supportés par ce terminal.

Chaque canal CN de transmission de flux de l'ensemble de canaux ENS est identifié par un identifiant IE1 d'une première entité E1 apte à établir ledit canal et un identifiant IE2 d'une deuxième entité E2. Une première entité, respectivement une deuxième entité, est soit un des terminaux TA, TB, TC, TD pour lequel le serveur de gestion S a reçu une demande de connexion, soit le dispositif de communication D.

De façon avantageuse, les canaux CN sont déterminés de façon à limiter le plus possible le nombre de canaux impliquant le dispositif de communication D, c'est-à-dire les canaux pour lesquels la première entité ou la deuxième entité est le dispositif de communication D.

Les canaux déterminés peuvent être représentés sous la forme d'un graphe.

Des exemples de graphes sont décrits dans la suite de la description.

Lors d'une étape E8, le module de transmission TRI du serveur de gestion S transmet à une ou plusieurs premières entités, au moins un identifiant IE2 de deuxième entité en vue de l'établissement des canaux de transmission de flux de l'ensemble ENS de canaux.

Dans une variante de réalisation, le module de transmission TRI du serveur de gestion S transmet également des données complémentaires relatives à un ou plusieurs canaux à établir. Ces données complémentaires définissent par exemple si le ou les canaux sont unidirectionnels ou bidirectionnels, le type des flux qui seront transmis via les canaux...

A titre d'alternative, au moins un identifiant de première entité est transmis pour information à une deuxième entité.

Egalement, à titre d'alternative, des informations relatives à tout ou partie des canaux de l'ensemble ENS de canaux sont transmises à chaque entité.

Lors d'une étape E10, le module de réception REI d'au moins une première entité reçoit un ou plusieurs identifiants de deuxième entité.

L'étape E10 est suivie d'une étape E12 lors de laquelle chaque première entité ayant reçu au moins un identifiant IE2 de deuxième entité établit au moins un canal de transmission CN avec au moins une deuxième entité pour laquelle elle a reçu un identifiant.

Dans le cas où la première entité est un terminal, le canal est établi par le module ETL d'établissement de canal de ce terminal.

L'établissement de canal permet ensuite la transmission de flux de données multimédia via le canal établi. Il permet notamment la réception d'un ou plusieurs flux entrants transmis par une autre entité du groupe d'entités et/ou la transmission de flux sortants à une autre entité du groupe d'entités

Selon les modes de réalisation, un flux transmis est un flux reçu d'un autre canal, un flux reçu d'un dispositif de capture tel qu'un micro ou une caméra, relié au terminal, un flux unique correspondant aux flux agrégés reçus d'autres canaux et éventuellement d'un dispositif de capture...

Selon les modes de réalisation, le canal de transmission établi par une entité est un canal bidirectionnel ou un canal unidirectionnel.

Lors d'une étape E20, réalisée par exemple après l'étape E12, le terminal TE transmet au serveur de gestion S une demande de connexion CXE.

La demande de connexion CXE est reçue par le serveur de gestion S lors d'une étape E22 et, lors d'une étape E24, le serveur de gestion S obtient des données de capacité CPE pour le terminal TE.

Le terminal TE représente un terminal supplémentaire.

Lors d'une étape E26, le serveur de gestion S réitère l'étape de détermination E6 avec un groupe d'entités comprenant les terminaux TA, TB, TC, TD et TE et obtient un deuxième ensemble ENS2 de canaux.

Le groupe d'entités comprenant les terminaux TA, TB, TC, TD et TE représente un troisième groupe d'entités.

Le deuxième ensemble de canaux ENS2 comporte un maximum de canaux déterminés lors de l'étape de détermination précédente.

Lors d'une étape E28, le serveur de gestion S transmet à une ou plusieurs premières entités du groupe, au moins un identifiant IE2 de deuxième entité.

Et, lors d'une étape E30, la ou les premières entités commandent l'établissement ou la coupure d'un ou plusieurs canaux CN en fonction des identifiants reçus.

Dans un mode de réalisation, seules les premières entités impactées par un changement de l'ensemble de canaux reçoivent une information du serveur de gestion S.

Dans une variante, chaque première entité reçoit à nouveau les informations relatives aux canaux pour lesquelles elles représentent une première entité.

Dans une autre variante de réalisation, les informations relatives aux canaux sont fournies à tous les terminaux TA, TB, TC, TD et TE du groupe.

Lors d'une étape E40, réalisée par exemple après l'étape E12 ou après l'étape E30, un terminal de l'ensemble des terminaux connectés, par exemple le terminal TA, envoie à destination du serveur de gestion S une demande de déconnexion DXA.

La demande de déconnexion DXA est reçue par le serveur de gestion S lors d'une étape E42.

A titre d'alternative, le serveur de gestion S détecte que le terminal TA n'est plus connecté.

La déconnexion peut être volontaire, c'est-à-dire à l'initiative d'un utilisateur du terminal TA, ou involontaire, par exemple suite à une panne du terminal ou un dysfonctionnement du réseau.

L'étape E42 est suivie d'une étape E44 lors de laquelle le serveur de gestion S réitère l'étape de détermination E6 avec un groupe d'entités comprenant les terminaux TB, TC, TD et TE restant connectés et obtient un troisième ensemble ENS3 de canaux.

Le groupe d'entités comprenant les terminaux TB, TC, TD et TE représente un deuxième groupe.

Le troisième ensemble ENS3 de canaux comporte un maximum de canaux déterminés lors de l'étape de détermination précédente.

Lors d'une étape E46, le serveur de gestion S transmet à une ou plusieurs premières entités, un identifiant de deuxième entité.

Et, la ou les premières entités ayant reçu au moins un identifiant de deuxième entité commande l'établissement ou la coupure d'un ou plusieurs canaux en fonction des identifiants reçus.

Dans un mode de réalisation, seules les premières entités impactées par un changement de l'ensemble de canaux reçoivent une information du serveur de gestion S.

Dans une variante, chaque première entité reçoit à nouveau les informations relatives aux canaux pour lesquels elle représente une première entité.

Les étapes E2, E4, E6 et E8, mises en œuvre par le serveur de gestion S, représentent des étapes du procédé d'initialisation d'une session de communication.

Les étapes E0, E10 et E12, mises en œuvre par un terminal, représentent des étapes du procédé d'accès à une session de communication

Dans une variante de réalisation, lors de l'étape de détermination E6, le serveur de gestion S détermine également des canaux secondaires de transmission de flux. Les canaux secondaires sont des canaux de transmission de flux à établir entre des entités du groupe d'entités. Les canaux secondaires sont des canaux redondants par rapport aux canaux de l'ensemble de canaux.

Selon un mode de réalisation, ces canaux sont établis par les premières entités mais dans un premier temps ils ne sont pas actifs, c'est-à-dire qu'ils ne sont pas utilisés pour transmettre des flux. Ils sont utilisés dans un deuxième temps suite par exemple à une déconnexion d'un terminal.

Selon un autre mode de réalisation, ces canaux ne sont établis que suite à une déconnexion d'un terminal.

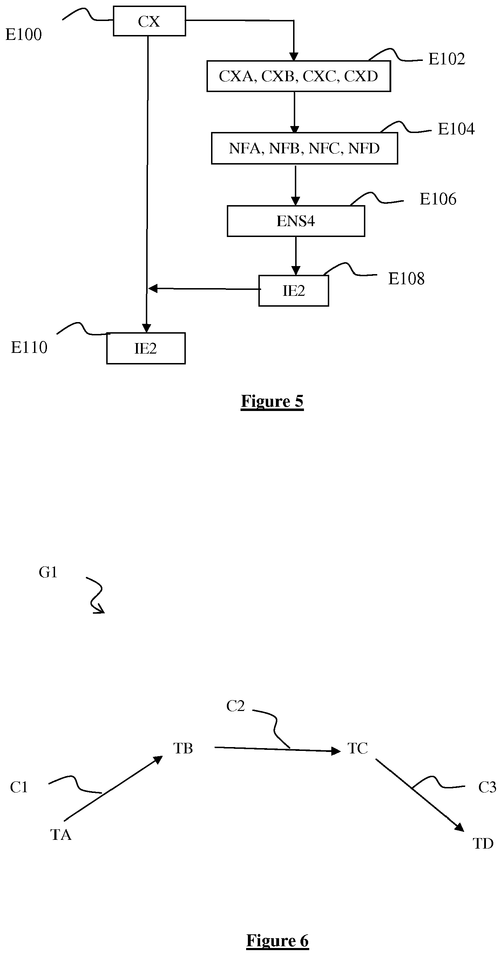

Un mode de réalisation d'un procédé d'initialisation d'une session de communication et d'un procédé d'accès à une session de communication, mis en œuvre dans le système SYS, dans lequel la session de communication est une session de conférence, va maintenant être décrit en référence à la **figure 5.**

Dans ce mode de réalisation, chaque terminal de la pluralité comporte, outre les modules décrits en relation avec la figure 2, un dispositif de capture de flux, par exemple un micro et /ou une caméra, apte à capturer des données audio et/ou vidéo et à générer un flux audio et/ou un flux vidéo à partir des données capturées.

Chaque terminal comporte également au moins un module de réception de flux et au moins un module d'émission de flux.

Lors d'une étape préalable de réservation d'une conférence effectuée par un utilisateur au moyen d'un terminal, un identifiant de conférence ICF a été reçu par cet utilisateur et transmis aux participants invités à cette conférence.

La procédure de réservation est une procédure connue de l'homme du métier et n'est pas détaillée ici.

Lors d'une étape E100, similaire à l'étape E0 du mode de réalisation précédent, chaque terminal TA, TB, TC, TD envoie au serveur de gestion S une demande de connexion CX à une session de conférence.

Chaque demande de connexion CX contient l'identifiant de conférence ICF et un nombre de flux NF entrants ou sortants pouvant être traités simultanément par le terminal.

Le nombre de flux NF correspond ici au nombre de modules de réception et de modules d'émission que comporte le terminal.

Le nombre de flux NF représente des données de capacité du terminal.

A titre d'alternative, une ou plusieurs demandes de connexion ne contiennent pas un nombre de flux NF et contiennent des données de capacité permettant de calculer le nombre de flux NF.

Chaque demande de connexion CX est reçue par le serveur de gestion S lors d'une étape E102.

Le serveur de gestion S reçoit dans le mode de réalisation décrit, quatre demande de connexion CXA, CXB, CXC et CXD en provenance respectivement des terminaux TA, TB, TC et TD.

Lors d'une étape E104, similaire à l'étape E4 du mode de réalisation précédent, le serveur de gestion S obtient pour chaque terminal des données de capacité du terminal.

Dans le mode de réalisation décrit, chaque demande de connexion CXA, CXB, CXC et CXD contient un nombre de flux NFA, NFB, NFC, NFD entrants ou sortants pouvant être traités simultanément par le terminal.

Par exemple, le nombre de flux NFA supportés par le terminal TA est 2, le nombre de flux NFB supportés par le terminal TB est 4, le nombre de flux NFC supportés par le terminal TC est 4 et le nombre de flux NFD supportés par le terminal TD est 4.

Lors d'une étape E106, le serveur de gestion S détermine un ensemble ENS1 de canaux CN à établir pour mettre en œuvre la session de conférence.

Dans ce mode de réalisation particulier dans lequel la session de communication est une session de conférence, le nombre de canaux à établir est le nombre de canaux à établir pour mettre en relation les terminaux TA, TB, TC et TD de sorte que chaque terminal est en relation avec chaque autre terminal soit directement soit par l'intermédiaire d'une entité intermédiaire servant de relais. L'entité intermédiaire est soit un terminal connecté, soit le dispositif de communication D.

Les canaux sont dans ce mode de réalisation des canaux bidirectionnels, c'est-à-dire des canaux aptes à véhiculer un flux entrant et un flux sortant.

Plus précisément, le serveur de gestion S calcule un nombre NC de canaux de transmission à établir pour mettre en œuvre la session de conférence, c'est-à-dire le nombre de canaux à établir pour faire communiquer entre eux les terminaux TA, TB, TC et TD.

Le serveur de gestion S calcul également un nombre NF de canaux pouvant être établis entre les terminaux.

Le nombre NF est par exemple obtenu par la formule :

$$NF = (NFA + NFB + NFC + NFD)/2 - (NBT - 1)$$

dans laquelle NBT est le nombre de terminaux à connecter.

Le serveur de gestion S compare ensuite le nombre NF et le nombre NC.

Dans le cas où le nombre NF est supérieur ou égal au nombre NC, les canaux sont établis directement entre les terminaux. Un dispositif de communication n'est pas nécessaire.

Dans le cas où le nombre NF est inférieur au nombre NC, au moins un canal est établi entre un terminal TA, TB, TC, TD et le dispositif de communication D.

La **figure 6** représente un premier exemple de graphe G1 représentant les canaux à établir entre les terminaux dans le cas où NFA = 2, NFB = 4, NFC = 4 et NFD = 2. Le nombre NF est alors de 3 et le nombre NC est de 3. Un premier canal C1 est à établir entre TA et TB, un deuxième canal C2 est à établir entre TB et TC, un troisième canal C3 entre TC et TD.

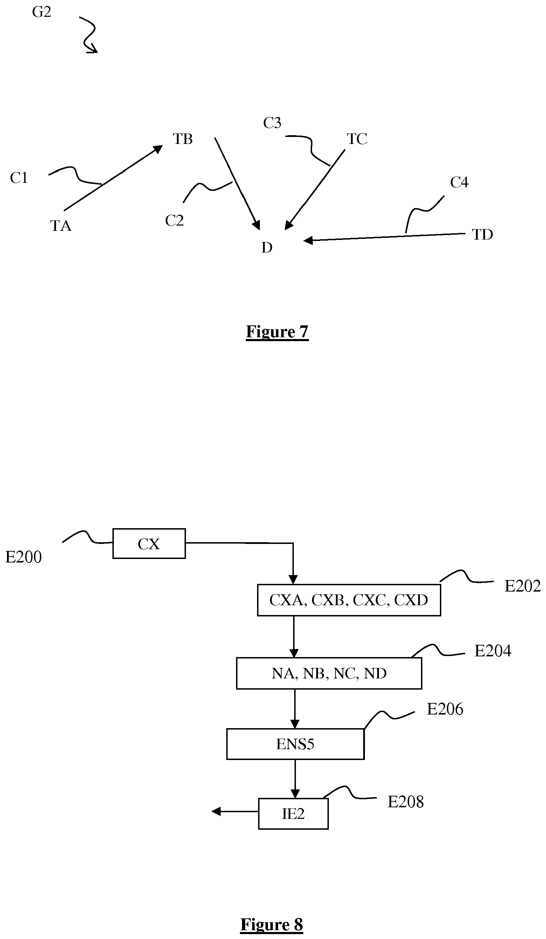

La **figure 7** représente un deuxième exemple de graphe G2 représentant les canaux à établir entre les terminaux dans le cas où NFA = 2, NFB = 4, NFC = 2 et ND = 2. Le nombre NF est alors de 2 et le nombre NC est de 3. Un dispositif de communication D est alors nécessaire. Un premier canal C1 est à établir entre TA et TB, un deuxième canal C2 est à établir entre TB et D, un troisième canal C3 entre TC et D et un quatrième canal C4 est à établir entre TD et D.

Chaque canal de transmission est identifié par un identifiant d'une première entité apte à établir ledit canal et un identifiant d'une deuxième entité. Une première entité, respectivement une deuxième entité, est soit un des terminaux TA, TB, TC, TD pour lequel le serveur de gestion S a reçu une demande de connexion, soit le dispositif de communication D.

Chaque canal de transmission C est ainsi identifié par un couple (IE1, IE2) dans lequel IE1 est un identifiant de première entité et IE2 est un identifiant de deuxième entité.

On obtient dans le cas de la figure 7 les canaux C1 (TA, TB), C2 (TB, D), C3(TC,D) et C4(TD,D).

Lors d'une étape E108, similaire à l'étape E8 du mode de réalisation précédent, le serveur de gestion S transmet à un ou plusieurs premières entités, au moins un identifiant IE2 de deuxième entité en vue de l'établissement des canaux de transmission.

Par exemple, le serveur de gestion S transmet au terminal TA, un identifiant IB du terminal TB. Il transmet également un identifiant IDC du dispositif de communication D aux terminaux TB, TC et TD.

L'étape E108 est suivie d'une étape E110 lors de laquelle chaque première entité ayant reçu au moins un identifiant de deuxième entité établit au moins un canal de transmission avec au moins une deuxième entité pour laquelle elle a reçu un identifiant.

L'établissement de canaux permet ensuite la transmission de flux multimédia sur les canaux établis.

Suite à l'obtention d'un flux reçu du dispositif de capture, le terminal transmet le flux obtenu via les canaux établis.

Dans le cas où le terminal établit plusieurs canaux de transmission, un flux obtenu d'un canal de transmission est transmis sur le ou les autres canaux établis.

Dans le cas de l'obtention simultanée de plusieurs flux, en provenance de canaux établis et/ou d'un dispositif de capture, le terminal transmet sur chaque canal établi un flux agrégé des flux reçus des autres canaux et du dispositif de capture.

Un mode de réalisation d'un procédé d'initialisation d'une session de communication et d'un procédé d'accès à une session de communication, mis en œuvre dans le système SYS, dans le cas de diffusion de type IPTV (pour « Internet Protocol Télévision » en anglais) va maintenant être décrit en référence à la **figure 8**.

Dans ce mode de réalisation, un canal de transmission de flux est un canal unidirectionnel apte à véhiculer un flux de données multimédia.

Le flux de données multimédia est dans ce mode de réalisation, un flux émis par un dispositif de diffusion (non représenté), par exemple un flux télévisé, et reçu en temps réel par le dispositif de communication D.

A titre d'alternative, le flux de données multimédia est un flux reçu préalablement par le dispositif de communication D et enregistré sous la forme d'un fichier dans une mémoire du dispositif de communication D.

Le dispositif de communication D est dans le mode de réalisation décrit un dispositif apte à recevoir le flux à diffuser et à le retransmettre en temps réel à un ou plusieurs terminaux.

Lors d'une étape E200, similaire à l'étape E0, chaque terminal TA, TB, TC, TD envoie au serveur de gestion S une demande de connexion CX.

Chaque demande de connexion CX contient un nombre de canaux unidirectionnels qui peuvent être supportés simultanément par le terminal émettant la demande de connexion.

Chaque demande de connexion CX est reçue par le serveur de gestion S lors d'une étape E202.

Le serveur de gestion S reçoit dans le mode de réalisation décrit, quatre demande de connexion CXA, CXB, CXC et CXD en provenance respectivement des terminaux TA, TB, TC et TD.

Lors d'une étape E204, le serveur de gestion S obtient des données de capacité pour au moins un des terminaux pour lesquels il a reçu une demande de connexion.

Les données de capacité sont dans ce mode de réalisation un nombre de canaux apte à être supportés en émission ou en réception par le terminal considéré. Elles sont extraites des demandes de connexion.

Par exemple, le nombre de canaux de transmission supportés respectivement par les terminaux TA, TB, TC et TD sont NA, NB, NC et ND.

Egalement, à titre d'alternative, seulement certains des terminaux fournissent un nombre de canaux supportés ou des informations de capacité permettant d'obtenir le nombre de canaux supportés. Dans ce cas, le nombre de canaux supportés par chaque terminal n'ayant pas fourni cette information est estimé égal à la valeur 1.

Lors d'une étape E206, le serveur de gestion S détermine un ensemble ENS5 de canaux C à établir pour mettre en œuvre le service de diffusion.

Le nombre de canaux à établir est le nombre de canaux à établir pour que chaque terminal reçoive le flux TV soit directement du dispositif de communication D, soit d'un autre terminal.

Le dispositif de communication D est dans le mode de réalisation décrit un dispositif apte à recevoir le flux à diffuser et à le retransmettre en temps réel à un ou plusieurs terminaux.

L'ensemble ENS5 de canaux est déterminé en fonction des nombres de canaux supportés par les différents terminaux obtenus lors de l'étape E204.

Chaque canal de communication est identifié par un identifiant d'une première entité apte à établir ledit canal et un identifiant d'une deuxième entité. Une première entité, respectivement une deuxième entité, est soit un des terminaux TA, TB, TC, TD pour lequel le serveur de gestion S a reçu une demande de connexion, soit le dispositif de communication D.

Par exemple, l'ensemble ENS est constitué de quatre canaux C5, C6, C7 et C8.

Chaque canal de transmission C est ainsi identifié par un couple (IE1, IE2) dans lequel IE1 est un identifiant de première entité et IE2 est un identifiant de deuxième entité.

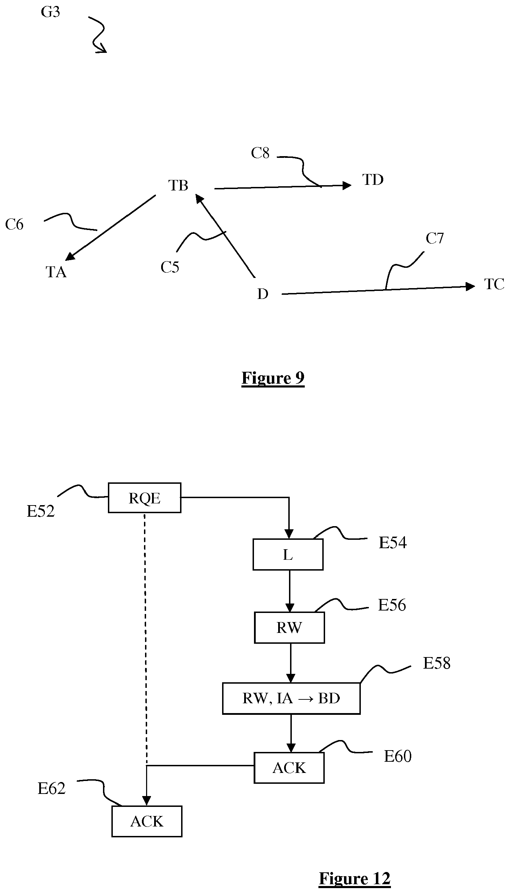

La **figure 9** illustre un ensemble de canaux déterminé dans le cas où NA=1, NB=3, NC =2 et ND = 1.

Les identifiants IEA, IEB, IEC et IED sont respectivement des identifiants des terminaux TA, TB, TC et TD. L'identifiant IDC est un identifiant du dispositif de communication D.

Le canal de transmission C5 est identifié par le couple (IDC, IEB). Le canal de transmission C6 est identifié par le couple (IEB, IEA). Le canal de transmission C7 est identifié par le couple (IDC, IEC). Le canal de transmission C8 est identifié par le couple (IEB, IED).

Lors d'une étape E208, le serveur de gestion S transmet à un ou plusieurs premières entités, au moins un identifiant IE2 de deuxième entité en vue de l'établissement des canaux de communication.

Le serveur de gestion S transmet par exemple au terminal TB, l'identifiant IEA et l'identifiant IED.

A titre d'alternative, au moins un identifiant de première entité est transmis pour information à une deuxième entité.

Egalement, à titre d'alternative, des informations relatives à l'ensemble ENS de canaux sont transmises à chaque entité.

Chaque première entité ayant reçu au moins un identifiant de deuxième entité établit au moins un canal de transmission avec au moins une deuxième entité pour laquelle elle a reçu un identifiant.

L'établissement de canal permet ensuite la transmission de flux multimédia sur les canaux établis.

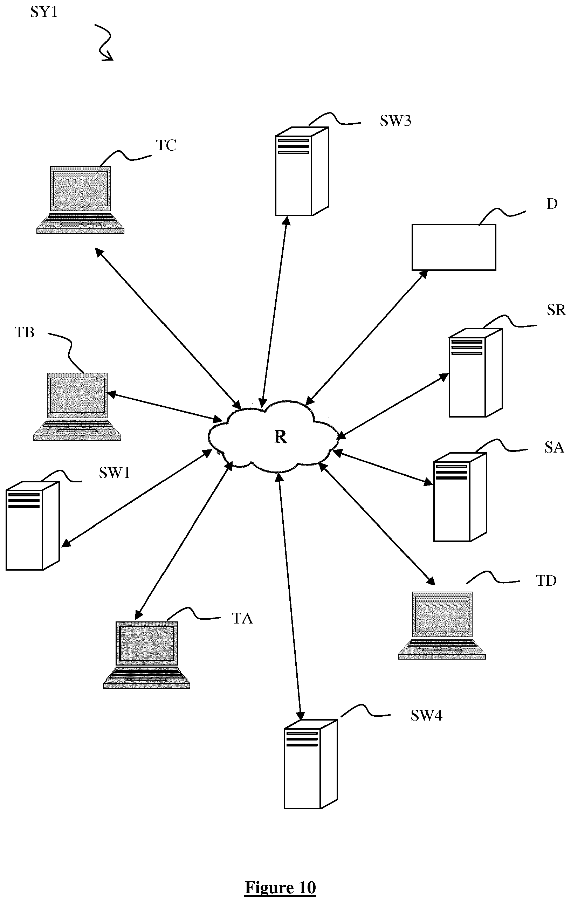

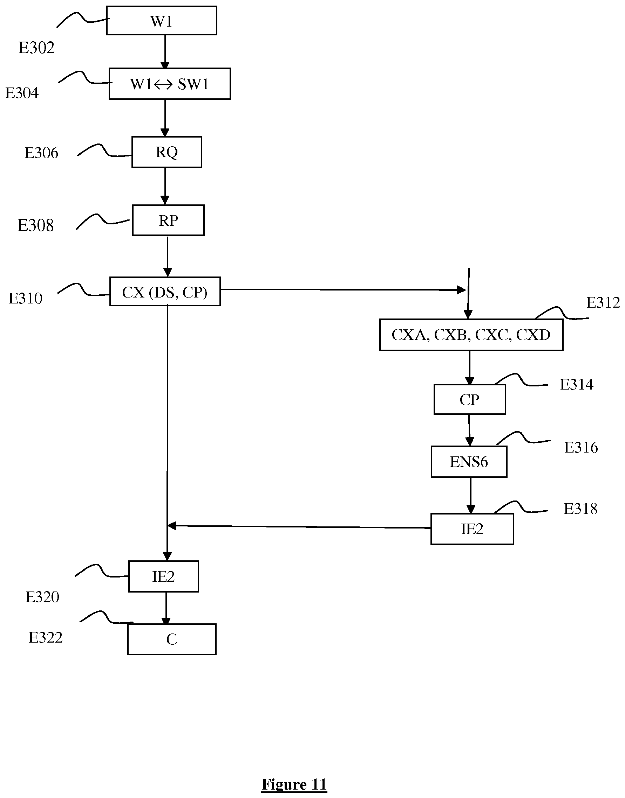

Un mode de réalisation d'un procédé d'initialisation d'une session de communication et d'un procédé d'accès à une session de communication va maintenant être décrit en référence aux figures 10 et 11.

En référence à la **figure 10**, un système SY1 comprend plusieurs terminaux, par exemple quatre terminaux TA, TB, TC et TD, aptes à communiquer via un réseau de communications R.

Le système SY1 comprend également un dispositif de communication D, par exemple un pont de conférence, apte à accéder au réseau de communication R.

Le réseau de communication R comprend le réseau Internet et/ou un réseau Intranet.

Le système SY1 comporte également un ou plusieurs serveurs de connexion, par exemple trois serveurs de connexion SW1, SW3 et SW4.

Le système SY1 comporte également un serveur d'application SA et un serveur de gestion de conférence SR.

Chaque terminal TA, TB, TC, TD communique avec un serveur distant, par exemple le serveur d'application SA ou le serveur de gestion de conférence SR, via un serveur de connexion auprès duquel il est enregistré.

Le terminal TA est par exemple un terminal mobile.

Les terminaux TB, TC, TD et TE sont par exemple des ordinateurs de type PC.

Plus généralement, chaque terminal TA, TB, TC, TD est un équipement apte à accéder au réseau R et apte à émettre et à recevoir un ou plusieurs flux de données multimédia.

Dans ce mode de réalisation, chaque terminal comporte un navigateur web NV.

Le navigateur NV est un navigateur web, c'est-à-dire un logiciel conçu pour consulter le World Wide Web.

Un mode de réalisation d'un procédé d'initialisation d'une session de communication et d'un procédé d'accès à une session de communication, mis en œuvre dans le système SY1, va maintenant être décrit en référence à la **figure 11.**

Lors d'une étape préalable de réservation d'une conférence, un identifiant de conférence ICF est déterminé et transmis à un terminal d'un organisateur de la conférence.

L'étape de réservation d'une conférence comprend de façon connue la réservation d'une date et d'un créneau horaire pour une conférence.

L'identifiant de conférence ICF est ensuite transmis par l'organisateur de la conférence aux personnes invitées à participer à la conférence. L'identifiant de conférence ICF permet à un utilisateur de se connecter à la conférence.

L'identifiant de conférence est par exemple un numéro de téléphone à 10 chiffres et/ou un mot de passe.

Lors d'une étape préalable E302, suite à une action de l'utilisateur de chaque terminal, une instance W1, W2, W3, W4 d'une application web est respectivement téléchargée sur chaque terminal TA, TB, TC, TD.

De façon connue, l'instance de l'application est reçue et enregistrée par le navigateur NV du terminal en réponse à une requête de téléchargement transmise par le navigateur NV du terminal à destination d'un serveur de téléchargement (non représenté).

Chaque instance d'application reçue W1, W2, W3, W4 comprend en paramètre une adresse AD d'un serveur de connexion SW1, SW3 ou SW4.

Lors d'une étape préalable E304, chaque instance d'application s'enregistre auprès d'un serveur de connexion.

Dans le mode de réalisation particulier décrit, l'instance d'application W1 installée sur le terminal TA et l'instance d'application W2 installée sur le terminal TB s'enregistrent respectivement auprès du serveur de connexion SW1, l'instance d'application W3 installée sur le terminal TC s'enregistre auprès du serveur de connexion SW3 et l'instance d'application W4 installée sur le terminal TD s'enregistre auprès du serveur de connexion SW4.

La procédure d'enregistrement est par exemple exécutée suite à une action de l'utilisateur du terminal.

L'exécution de la procédure d'enregistrement d'une instance d'application d'un terminal auprès d'un serveur de connexion permet l'établissement d'un canal de communication entre l'instance d'application et le serveur de connexion. Grâce à ce canal de communication, l'instance d'application peut joindre et être jointe par des entités reliées au réseau R, par exemple par le serveur d'application SA ou le serveur de gestion de conférence SR.

La procédure d'enregistrement permet également la détermination par le serveur de connexion d'un identifiant d'instance RW et l'enregistrement dans une base de données dudit identifiant d'instance RW en association avec un identifiant IU de l'utilisateur du terminal.

L'identifiant d'instance RW déterminé pour une instance d'application permet de joindre ladite instance.

L'identifiant d'utilisateur IU est un identifiant de joignabilité d'un utilisateur, par exemple un numéro de téléphone d'un terminal de cet utilisateur, par exemple du terminal TA, ou une adresse de messagerie. L'identifiant d'utilisateur IU est propre à cet utilisateur. Il permet de l'identifier de façon unique.

Un exemple de réalisation d'une procédure d'enregistrement d'une instance d'application auprès du serveur de connexion est décrit dans la suite de la description en référence à la figure 12.

L'étape E304 est suivie d'une étape E306 lors de laquelle chaque instance d'application de chaque terminal TA, TB, TC, TD envoie une requête de service RQ à destination du serveur d'application SA, via le serveur de connexion auquel elle est rattachée.

La requête de service RQ contient par exemple l'identifiant de conférence ICF.

A titre d'alternative, la requête RQ est une demande de réservation de conférence.

Lors d'une étape E308, chaque instance d'application reçoit une réponse RP à la requête de service RQ contenant des données de service DS relatives au terminal hébergeant l'instance d'application.

Les données de service DS sont par exemple un nom d'utilisateur, une photo, un identifiant de terminal.

A titre d'alternative, la réponse RP ne contient pas de données de services.

Lors d'une étape E310, chaque instance d'application de chaque terminal envoie une demande de connexion CX à destination du serveur de gestion de conférence SR, via le serveur de connexion auquel il est rattaché.

La demande de connexion CX contient l'identifiant d'instance RW de l'instance d'application, l'identifiant de conférence ICF, tout ou partie des données de service DS et des données de capacité CP du terminal.

A titre d'alternative, dans le cas où l'identifiant d'instance RW n'est pas transmis au terminal lors de la phase d'enregistrement, la demande de connexion CX comprend un identifiant IU de l'utilisateur du terminal, par exemple une adresse mail de l'utilisateur et le serveur de connexion remplace, dans la demande de connexion CX, l'identifiant d'utilisateur IU par l'identifiant d'instance RW avant de transmettre la demande de connexion CX au serveur de gestion de conférence SR.

A titre d'alternative, les étapes E306 et E308 ne sont pas réalisées par un ou plusieurs terminaux et la demande de connexion émise par ces terminaux ne comprend pas de données de service DS.

Lors d'une étape E312, le serveur de gestion de conférence SR reçoit les différentes demandes de connexion CXA, CXB, CXC, CXD émises respectivement par les terminaux TA, TB, TC, TD.

Lors d'une étape E314, similaire à l'étape E4, le serveur de gestion de conférence SR obtient des données de capacité CP par au moins un des terminaux pour lesquels il a reçu une demande de connexion.

Dans le mode de réalisation décrit, l'étape d'obtention E314 est une étape d'extraction des différentes demandes de connexion.

Lors d'une étape E316, similaire à l'étape E6, le serveur de conférence SR détermine un ensemble ENS6 de canaux de transmission de flux C à établir pour mettre en œuvre le service de conférence.

L'ensemble ENS6 est un ensemble de canaux de transmission de flux à établir entre des entités d'un groupe d'entités comprenant lesdits terminaux de sorte que chaque terminal reçoive les données émises au sein de ladite session par au moins une entité dudit groupe d'entités soit directement, soit indirectement au travers d'au moins une entité intermédiaire dudit groupe servant de relais.

Plus précisément, dans ce mode de réalisation, chaque terminal doit pouvoir transmettre un flux de données multimédia à chaque autre terminal.

L'ensemble ENS6 de canaux de transmission est déterminé en fonction des données de capacités des différents terminaux obtenues lors de l'étape E314.

Chaque canal de transmission est identifié par un identifiant d'une première entité du groupe d'entités apte à établir ledit canal et un identifiant d'une deuxième entité du groupe d'entités. Une première entité, respectivement une deuxième entité, est soit un des terminaux TA, TB, TC, TD pour lequel le serveur de gestion de conférence SR a reçu une demande de connexion, soit le dispositif de communication D.

De façon avantageuse, les canaux de transmission sont déterminés de façon à limiter le plus possible les canaux de transmission de flux impliquant le dispositif de communication D, c'est-à-dire les canaux de transmission pour lesquels la première entité ou la deuxième entité est le dispositif de communication D.

Par exemple, l'ensemble ENS est constitué de quatre canaux de transmission C1, C2, C3 et C4.

Lors d'une étape E318, le serveur de gestion de conférence SR transmet à chaque entité, des informations relatives à l'ensemble ENS6 de canaux.

Ces informations relatives à l'ensemble ENS6 comprennent pour chaque canal de l'ensemble ENS de canaux, un identifiant de première entité et un identifiant de deuxième entité. Elles comprennent également les données de service DS relatives à chaque terminal.

A titre d'alternative, seulement une partie des informations relatives à l'ensemble ENS6 de canaux est transmise à un ou plusieurs terminaux. Par exemple, le serveur de gestion de conférence SR transmet aux premières entités, au moins un identifiant IE2 de deuxième entité en vue de l'établissement des canaux de transmission.

Lors d'une étape E320, au moins une entité reçoit un ou plusieurs identifiants de deuxième entité.

L'étape E320 est suivie d'une étape E322 lors de laquelle chaque première entité ayant reçu au moins un identifiant de deuxième entité établit au moins un canal de transmission avec au moins une deuxième entité pour laquelle elle a reçu un identifiant.

L'établissement d'un canal de transmission permet ensuite la transmission de flux multimédia via ce canal.

Un mode de réalisation particulier de l'enregistrement d'une application web W auprès d'un serveur de connexion SW va maintenant être décrit en référence à la **figure 12.**

Lors d'une étape E52, suite par exemple à une action de l'utilisateur du terminal TA pour lancer l'exécution de l'instance d'application W, l'instance d'application W envoie une requête d'établissement de connexion RQE au serveur de connexion SW au moyen de l'adresse AD reçue en paramètre lors du téléchargement de l'instance d'application W.

A titre d'alternative, l'adresse AD du serveur de connexion SW n'est pas reçue lors de la phase de téléchargement et l'adresse AD du serveur de connexion SW est reçue par l'instance d'application W en réponse à une demande d'adresse effectuée auprès d'un serveur de gestion de service dont l'adresse a été reçue en paramètre lors du téléchargement de l'instance d'application W.

Egalement, à titre d'alternative, l'adresse AD du serveur de connexion SW est obtenue par l'instance d'application W par une recherche de type DNS (pour «Domain Name System » en anglais).

La requête d'établissement de connexion RQE est reçue par le serveur de connexion SW lors d'une étape E54 et le serveur de connexion SW établit un canal de communication L avec le navigateur NV. Le canal de communication L est par exemple une connexion de type Websocket.

Le canal de communication L permet, de façon connue, une communication entre le serveur de connexion SW et le navigateur NV et, en conséquence une communication entre le serveur de connexion SW et l'instance d'application W.

Lors d'une étape E56, le serveur de connexion SW commande la détermination d'un identifiant d'instance RW pour l'instance d'application W.

Dans le mode de réalisation décrit, l'identifiant d'instance RW est déterminé par le serveur de connexion SW.

A titre d'alternative, l'identifiant d'instance RW est déterminé par un serveur d'accueil ou un serveur central.

L'identifiant d'instance RW comprend un premier identifiant ID1 et un deuxième identifiant ID2.

Le deuxième identifiant ID2 permet d'identifier un serveur d'accueil au sein du réseau R. C'est un pointeur vers ce serveur d'accueil. Le serveur d'accueil est un serveur de connexion ou un autre serveur.

Dans le cas où le serveur d'accueil n'est pas le serveur de connexion associé à l'instance d'application, le premier identifiant ID1 est une valeur ou une chaine de caractères permettant d'une part au serveur d'accueil d'identifier un serveur de connexion et d'autre part, au serveur de connexion identifié d'identifier le canal de communication L.

Le premier identifiant ID1 représente de façon unique l'instance d'application web W au niveau du serveur d'accueil.

Il permet au serveur de connexion SW d'identifier le canal de communication L et, en conséquence l'instance d'application web W parmi les instances d'application qui lui sont connectées. Il constitue un pointeur local vers le canal de communication L.

Dans le mode de réalisation décrit où le serveur de connexion SW représente un serveur d'accueil, le deuxième identifiant ID2 permet d'identifier le serveur de connexion SW au sein du réseau R et le premier identifiant ID1 est une valeur ou une chaine de caractères permettant au serveur de connexion SW d'identifier le canal de communication L.

Le deuxième identifiant ID2 est par exemple un nom de domaine associé au serveur de connexion SW.

Le deuxième identifiant ID2 est par exemple un nom de domaine absolu, appelé également FQDN (« nom de domaine complètement qualifié » ou « Fully Qualified Domain Name » en anglais), c'est-à-dire un nom de domaine qui indique la position absolue d'un nœud représentant le serveur de connexion SW dans l'arborescence du réseau R en indiquant tous les domaines de niveau supérieur jusqu'à la racine.

Par exemple, le deuxième identifiant ID2 est « serveur45.communications.orange.fr ».

A titre alternatif, le deuxième identifiant est un nom de domaine relatif, par exemple «communications.orange.fr ». Dans cette variante, la génération du premier identifiant ID1 est par exemple centralisée au sein du domaine et le serveur de connexion SW doit se référer à une entité centrale, par exemple une base de données, pour obtenir tout ou partie du premier identifiant ID1.

Egalement, à titre d'alternative, le premier identifiant ID1 est déterminé selon des règles de détermination prédéfinies. Par exemple, chaque premier identifiant ID1 comporte un préfixe identifiant le serveur de connexion SW. Selon un autre exemple, des plages de numéros sont attribuées à chaque serveur de connexion par un serveur central et le serveur de connexion SW attribue le premier identifiant ID1 en fonction de la plage attribuée.

L'identifiant d'instance RW est par exemple obtenu par concaténation du premier identifiant ID1 et du deuxième identifiant ID2.

L'identifiant d'instance est par exemple une URI (pour « Uniform Resource Identifier » en anglais).

L'identifiant d'instance RW est par exemple de la forme : « rsi : ID1@ID2 » dans lequel «rsi » est un terme identifiant un identifiant d'instance.

Le serveur de connexion SW enregistre dans une table de correspondance du serveur de connexion SW, l'identifiant d'instance RW en association avec un identifiant de connexion IC.

L'identifiant de connexion IC est une valeur ou une chaine de caractères permettant au serveur de connexion SW de retrouver parmi différents canaux de connexion établis, le canal de communication L associé à l'instance d'application W.

L'identifiant de connexion IC est par exemple un identifiant du canal de communication L.

Lors d'une étape E58, le serveur de connexion SW commande l'enregistrement de l'identifiant d'instance RW en association avec un identifiant d'utilisateur IA dans une base de données.

L'identifiant d'utilisateur IA est un identifiant de joignabilité de l'utilisateur A, par exemple un numéro de téléphone d'un terminal de l'utilisateur A, par exemple du terminal TA ou une adresse de messagerie de l'utilisateur A. L'identifiant d'utilisateur IA est propre à l'utilisateur A. Il permet d'identifier de façon unique l'utilisateur A.

L'identifiant d'utilisateur IA est par exemple contenu dans la requête d'établissement de connexion RQE.

A titre d'alternative, l'identifiant d'utilisateur IA est par exemple obtenu en réponse à une requête d'identifiant utilisateur transmise à un serveur d'identité (non représenté) et contenant une preuve d'identité de l'utilisateur A. La preuve d'identité est par exemple obtenue lors d'une phase préalable d'authentification de l'utilisateur A, à l'aide par exemple d'un couple login/password, et transmise dans la requête d'établissement de connexion RQE.

A titre d'alternative, l'enregistrement de l'identifiant d'instance RW et l'obtention de l'identifiant utilisateur IA sont effectués par un serveur d'enregistrement (non représenté) et l'étape E58 est une étape d'envoi à ce serveur d'enregistrement d'une demande d'enregistrement de l'instance d'application web W. La demande d'enregistrement contient l'identifiant d'instance RW généré lors de l'étape E56.

A titre d'alternative, la demande d'enregistrement contient également des informations propres au service

Lors d'une étape E60, le serveur de connexion SW envoie un message d'acquittement ACK à l'instance d'application W via le canal de communication L et le navigateur NV.

Le message d'acquittement ACK constitue une preuve de l'établissement du canal de communication L.

Le message d'acquittement ACK contient l'identifiant d'instance RW.

A titre d'alternative, le message d'acquittement ACK ne contient pas l'identifiant d'instance RW.

Le message d'acquittement ACK est reçu par l'instance d'application W lors d'une étape E62 et un message indiquant à l'utilisateur que la connexion est établie est par exemple affiché sur une interface graphique du navigateur NV.

L'identifiant d'instance permet d'identifier de façon unique l'instance d'application dans le réseau. Le deuxième identifiant permet d'adresser un serveur d'accueil. Le premier identifiant permet ensuite au serveur d'accueil d'identifier le serveur de connexion associé puis au serveur de connexion d'identifier l'instance d'application à contacter parmi les instances d'applications qui lui sont connectées.

## Revendications

1. Procédé d'initialisation d'une session de communication (SE) entre une pluralité de terminaux (TA, TB, TC, TD), ledit procédé comprenant les étapes suivantes, mises en œuvre par un serveur (S):

- obtention (E4, E104, E204, E314) de données de capacité (CP) pour au moins un desdits terminaux, lesdites données de capacité obtenues pour un terminal étant relatives à la capacité du terminal à recevoir et/ou émettre simultanément plusieurs flux ;

ledit procédé étant **caractérisé en ce qu'**il comprend en outre les étapes suivantes, mises en œuvre par ledit serveur :

- détermination (E6, E106, E206, E316) d'un ensemble (ENS, ENS4, ENS5, ENS6) de canaux de transmission de flux à établir entre des entités d'un groupe d'entités comprenant lesdits terminaux, chaque canal étant à établir entre une première entité dudit groupe et une deuxième entité dudit groupe, le nombre et le type des canaux dudit ensemble dépendant du service à mettre en œuvre pour ladite session (SE), ladite détermination comprenant pour chaque canal de transmission de flux dudit ensemble, la détermination en fonction desdites données de capacité obtenues, d'une première entité (E1) du groupe apte à établir ledit canal et d'une deuxième entité (E2) du groupe, chaque canal étant identifié par un identifiant (IE1) de ladite première entité et un identifiant (IE2) de ladite deuxième entité;
- transmission (E8) à au moins une dite première entité (E1) dudit groupe, d'au moins un identifiant d'entité (IE2) en vue de l'établissement d'au moins un canal de transmission de flux dudit ensemble, ledit au moins un canal correspondant auxdits identifiants.

2. Procédé d'initialisation selon la revendication 1 dans lequel l'étape de détermination dudit ensemble de canaux comprend les étapes de :

- calcul, à partir des données de capacité obtenues, d'un nombre NF de canaux de transmission de flux pouvant être établis entre lesdits terminaux pour ladite session de communication;
- calcul d'un nombre NC de canaux de transmission de flux nécessaires pour relier entre eux tous les terminaux de la pluralité ;
- comparaison dudit nombre NF de canaux de transmission de flux pouvant être établis entre lesdits terminaux et dudit nombre NC de canaux de transmission de flux nécessaires ;

et dans lequel ledit ensemble de canaux de transmission de flux comprend NC canaux de transmission de flux reliant directement deux terminaux de la pluralité si le nombre NF de canaux de transmission de flux pouvant être établis entre lesdits terminaux est supérieur ou égal audit nombre NC de canaux de transmission de flux nécessaires.

3. Procédé d'initialisation selon la revendication 2 dans lequel si le nombre NF de canaux de canaux de transmission de flux pouvant être établis entre lesdits terminaux est inférieur audit nombre NC de canaux de transmission de flux nécessaires, ledit ensemble de canaux de transmission de flux comprend au moins un canal de transmission de flux à établir entre un des terminaux et un dispositif de communication.

4. Procédé d'initialisation selon l'une des revendications précédentes dans lequel suite à la réception d'une notification de déconnexion d'un terminal de la pluralité, respectivement d'une demande de connexion d'un terminal supplémentaire, l'étape de détermination est réitérée avec un deuxième groupe d'entités comprenant les autres terminaux de la pluralité, respectivement avec un troisième groupe d'entités comprenant les terminaux de la pluralité et ledit terminal supplémentaire.

5. Procédé d'initialisation selon la revendication 4 dans lequel lors la réitération de l'étape de détermination, les canaux entre une première et une deuxième entité déterminés lors d'une itération précédente sont maintenus si la première et la deuxième entité restent connectées.

6. Procédé d'initialisation selon l'une des revendications précédentes **caractérisé en ce qu'**il comprend en outre une étape de détermination de canaux secondaires utilisés en cas de déconnexion d'un terminal.

7. Procédé d'initialisation selon l'une des revendications précédentes dans lequel l'étape de transmission comprend la transmission à chaque terminal, d'informations relatives à chaque canal dudit ensemble, lesdites informations comprenant au moins un identifiant d'une première entité et un identifiant de deuxième entité.

8. Procédé d'initialisation selon la revendication 7 dans lequel l'étape de transmission comprend en outre la transmission à chaque terminal, des données de service (DS) relatives à au moins un terminal.

9. Serveur (S) comprenant :

- un module d'obtention (OBL) de données de capacité pour au moins un terminal d'une pluralité de terminaux, lesdites données de capacité obtenues pour un terminal étant relatives à la capacité du terminal à recevoir et/ou émettre simultanément plusieurs flux ;

ledit serveur étant **caractérisé en ce qu'**il comprend en outre :

- un module de détermination (DTL) d'un ensemble de canaux de transmission de flux à établir entre des entités d'un groupe d'entités comprenant lesdits terminaux, chaque canal de transmission de flux dudit ensemble étant à établir entre une première entité et une deuxième entité du groupe, chaque canal étant à établir entre une première entité dudit groupe et une deuxième entité dudit groupe, le nombre et le type des canaux dudit ensemble dépendant du service à mettre en œuvre pour ladite session (SE), ladite détermination comprenant pour chaque canal de transmission de flux dudit ensemble, la détermination, en fonction desdites données de capacité obtenues, d'une première entité (E1) du groupe apte à établir ledit canal et d'une deuxième entité (E2) du groupe, chaque canal étant identifié par un identifiant (IE1) de ladite première entité et un identifiant (IE2) de ladite deuxième entité ;

- un module de transmission (TRI) à au moins une dite première entité dudit groupe, d'au moins un identifiant d'entité en vue de l'établissement d'au moins un canal de transmission de flux dudit ensemble, ledit au moins un canal correspondant auxdits identifiants.

10. Produit programme d'ordinateur comprenant des instructions de code pour mettre en œuvre un procédé d'initialisation d'une session de communication selon la revendication 1, lorsqu'il est chargé et exécuté par un processeur.

**Patentansprüche**

1. Verfahren zur Initialisierung einer Kommunikationssitzung (SE) zwischen einer Mehrzahl von Endgeräten (TA, TB, TC, TD), wobei das Verfahren die folgenden, von einem Server (S) ausgeführten Schritte umfasst:

- Erhalten (E4, E104, E204, E314) von Kapazitätsdaten (CP) für mindestens eines der Endgeräte, wobei sich die für ein Endgerät erhaltenen Kapazitätsdaten auf die Kapazität des Endgeräts beziehen, mehrere Datenströme gleichzeitig zu empfangen und/oder zu senden;

wobei das Verfahren **dadurch gekennzeichnet ist, dass** es ferner die folgenden, von dem Server ausgeführten Schritte umfasst:

- Bestimmen (E6, E106, E206, E316) einer Menge (ENS, ENS4, ENS5, ENS6) von Datenstromübertragungskanälen, die zwischen Einheiten einer Gruppe von Einheiten, welche die Endgeräte umfasst, aufzubauen sind, wobei jeder Kanal zwischen einer ersten Einheit der Gruppe und einer zweiten Einheit der Gruppe aufzubauen ist, wobei die Anzahl und die Art der Kanäle der Menge von dem für die Sitzung (SE) auszuführenden Dienst abhängig sind, wobei das Bestimmen für jeden Datenstromübertragungskanal der Menge das Bestimmen einer ersten Einheit (E1) der Gruppe, die geeignet ist, den Kanal aufzubauen, und einer zweiten Einheit (E2) der Gruppe in Abhängigkeit von den erhaltenen Kapazitätsdaten umfasst, wobei jeder Kanal durch eine Kennung (IE1) der ersten Einheit und eine Kennung (IE2) der zweiten Einheit gekennzeichnet ist;

- Übertragen (E8) mindestens einer Einheitenkennung (IE2) an mindestens eine erste Einheit (E1) der Gruppe im Hinblick auf das Aufbauen mindestens eines Datenstromübertragungskanals der Menge, wobei der mindestens eine Kanal den Kennungen entspricht.

2. Initialisierungsverfahren nach Anspruch 1, bei dem der Schritt des Bestimmens der Menge von Kanälen die folgenden Schritte umfasst:

- Berechnen einer Anzahl NF von Datenstromübertragungskanälen, die zwischen den Endgeräten für die Kommunikationssitzung aufgebaut werden können, anhand der erhaltenen Kapazitätsdaten;

- Berechnen einer Anzahl NC von Datenstromübertragungskanälen, die erforderlich sind, um alle Endgeräte der Mehrzahl untereinander zu verbinden;

- Vergleichen der Anzahl NF von Datenstromübertragungskanälen, die zwischen den Endgeräten aufgebaut werden können, und der Anzahl NC von erforderlichen Datenstromübertragungskanälen;

und bei dem die Menge von Datenstromübertragungskanälen NC Datenstromübertragungskanäle umfasst, die zwei Endgeräte der Mehrzahl direkt verbinden, wenn die Anzahl NF von Datenstromübertragungskanälen, die zwischen den Endgeräten aufgebaut werden können, größer oder gleich der Anzahl NC von erforderlichen Datenstromübertragungskanälen ist.

3. Initialisierungsverfahren nach Anspruch 2, bei dem, wenn die Anzahl NF von Datenstromübertragungskanälen, die zwischen den Endgeräten aufgebaut werden können, kleiner als die Anzahl NC von erforderlichen Datenstromübertragungskanälen ist, die Menge von Datenstromübertragungskanälen mindestens einen Datenstromübertragungskanal umfasst, der zwischen einem der Endgeräte und einer Kommunikationseinrichtung aufzubauen ist.

**4.** Initialisierungsverfahren nach einem der vorhergehenden Ansprüche, bei dem nach dem Empfangen einer Benachrichtigung über eine Trennung der Verbindung eines Endgeräts der Mehrzahl bzw. einer Einwahlanforderung eines zusätzlichen Endgeräts der Bestimmungsschritt mit einer zweiten Einheitengruppe, welche die anderen Endgeräte der Mehrzahl umfasst, bzw. mit einer dritten Einheitengruppe, welche die Endgeräte der Mehrzahl und das zusätzliche Endgerät umfasst, wiederholt wird.

**5.** Initialisierungsverfahren nach Anspruch 4, bei dem die Kanäle zwischen einer ersten und einer zweiten Einheit, die bei einer vorausgegangenen Wiederholung bestimmt wurden, bei der Wiederholung des Bestimmungsschritts aufrechterhalten werden, wenn die erste und die zweite Einheit eingewählt bleiben.

**6.** Initialisierungsverfahren nach einem der vorhergehenden Ansprüche, **dadurch gekennzeichnet, dass** es ferner einen Schritt des Bestimmens von sekundären Kanälen umfasst, die im Fall der Trennung der Verbindung eines Endgeräts verwendet werden.

**7.** Initialisierungsverfahren nach einem der vorhergehenden Ansprüche, bei dem der Übertragungsschritt die Übertragung von Informationen bezüglich jedes Kanals der Menge an jedes Endgerät umfasst, wobei die Informationen mindestens eine Kennung einer ersten Einheit und eine Kennung der zweiten Einheit umfassen.

**8.** Initialisierungsverfahren nach Anspruch 7, bei dem der Übertragungsschritt ferner die Übertragung der Dienstedaten (DS) bezüglich mindestens eines Endgeräts an jedes Endgerät umfasst.

**9.** Server (S), umfassend:

- ein Modul zum Erhalten (OBL) von Kapazitätsdaten für mindestens ein Endgerät einer Mehrzahl von Endgeräten, wobei sich die für ein Endgerät erhaltenen Kapazitätsdaten auf die Kapazität des Endgeräts beziehen, mehrere Datenströme gleichzeitig zu empfangen und/oder zu senden;

wobei der Server **dadurch gekennzeichnet ist, dass** er ferner umfasst:

- ein Modul zum Bestimmen (DTL) einer Menge von Datenstromübertragungskanälen, die zwischen Einheiten einer Gruppe von Einheiten, welche die Endgeräte umfasst, aufzubauen sind, wobei jeder Datenstromübertragungskanal der Menge zwischen einer ersten Einheit und einer zweiten Einheit der Gruppe aufzubauen ist, wobei die Anzahl und die Art der Kanäle der Menge von dem für die Sitzung (SE) auszuführenden Dienst abhängig sind, wobei das Bestimmen für jeden Datenstromübertragungskanal der Menge das Bestimmen einer ersten Einheit (E1) der Gruppe, die geeignet ist, den Kanal aufzubauen, und einer zweiten Einheit (E2) der Gruppe in Abhängigkeit von den erhaltenen Kapazitätsdaten umfasst, wobei jeder Kanal durch eine Kennung (IE1) der ersten Einheit und eine Kennung (IE2) der zweiten Einheit gekennzeichnet ist;

- ein Modul zum Übertragen (TRI) mindestens einer Einheitenkennung an mindestens eine erste Einheit der Gruppe im Hinblick auf das Aufbauen mindestens eines Datenstromübertragungskanals der Menge, wobei der mindestens eine Kanal den Kennungen entspricht.

**10.** Computerprogrammprodukt, das Codeanweisungen umfasst, um ein Verfahren zur Initialisierung einer Kommunikationssitzung nach Anspruch 1 auszuführen, wenn es von einem Prozessor geladen und ausgeführt wird.

**Claims**

**1.** Method for initializing a communication session (SE) between a plurality of terminals (TA, TB, TC, TD), said method comprising the following steps, implemented by a server (S):

- obtaining (E4, E104, E204, E314) capability data (CP) for at least one of said terminals, said capability data obtained for a terminal relating to the capability of the terminal to receive and/or send a plurality of flows simultaneously;

said method being **characterized in that** it furthermore comprises the following steps, implemented by said server:

- determining (E6, E106, E206, E316) a set (ENS, ENS4, ENS5, ENS6) of flow transmission channels to be established between entities of a group of entities comprising said terminals, each channel needing to be established between a first entity of said group and a second entity of said group, the number and the type of the channels of said set depending on the service to be implemented for said session (SE), said determination comprising, for each flow transmission channel of said set, determining, on the basis of said obtained capability data, a first entity (E1) of the group able to establish said channel and a second entity (E2) of the group, each channel being identified by an identifier (IE1) of said first entity and an identifier (IE2) of said second entity;
- transmitting (E8) at least one entity identifier (IE2) to at least one said first entity (E1) of said group for the purpose of establishing at least one flow transmission channel of said set, said at least one channel corresponding to said identifiers.

2. Initialization method according to Claim 1, wherein the step of determining said set of channels comprises the steps of:

- calculating, from the obtained capability data, a number NF of flow transmission channels able to be established between said terminals for said communication session;
- calculating a number NC of flow transmission channels necessary to connect all of the terminals of the plurality to one another;
- comparing said number NF of flow transmission channels able to be established between said terminals and said number NC of necessary flow transmission channels;

and wherein said set of flow transmission channels comprises NC flow transmission channels directly connecting two terminals of the plurality if the number NF of flow transmission channels able to be established between said terminals is greater than or equal to said number NC of necessary flow transmission channels.

3. Initialization method according to Claim 2, wherein, if the number NF of flow transmission channels able to be established between said terminals is less than said number NC of necessary flow transmission channels, said set of flow transmission channels comprises at least one flow transmission channel to be established between one of the terminals and a communication device.

4. Initialization method according to one of the preceding claims, wherein, following the reception of a disconnection notification from a terminal of the plurality, respectively of a connection request from an additional terminal, the determination step is reiterated with a second group of entities comprising the other terminals of the plurality, respectively with a third group of entities comprising the terminals of the plurality and said additional terminal.

5. Initialization method according to Claim 4, wherein, in the reiteration of the determination step, the channels between a first and a second entity that are determined in a previous iteration are maintained if the first and the second entity remain connected.

6. Initialization method according to one of the preceding claims, **characterized in that** it furthermore comprises a step of determining secondary channels used in the event of disconnection of a terminal.

7. Initialization method according to one of the preceding claims, wherein the transmission step comprises transmitting information relating to each channel of said set to each terminal, said information comprising at least one identifier of a first entity and one identifier of a second entity.

8. Initialization method according to Claim 7, wherein the transmission step furthermore comprises transmitting service data (DS) relating to at least one terminal to each terminal.

9. Server (S) comprising:

- an obtainment module (OBL) for obtaining capability data for at least one terminal of a plurality of terminals, said capability data obtained for a terminal relating to the capability of the terminal to receive and/or send a plurality of flows simultaneously;

said server being **characterized in that** it furthermore comprises:

- a determination module (DTL) for determining a set of flow transmission channels to be established between entities of a group of entities comprising said terminals, each flow transmission channel of said set needing to be established between a first entity and a second entity of the group, each channel needing to be established between a first entity of said group and a second entity of said group, the number and the type of the channels of said set depending on the service to be implemented for said session (SE), said determination comprising, for each flow transmission channel of said set, determining, on the basis of said obtained capability data, a first entity (E1) of the group able to establish said channel and a second entity (E2) of the group, each channel being identified by an identifier (IE1) of said first entity and an identifier (IE2) of said second entity;
- a transmission module (TRI) for transmitting at least one entity identifier to at least one said first entity of said group for the purpose of establishing at least one flow transmission channel of said set, said at least one channel corresponding to said identifiers.

**10.** Computer program product comprising code instructions for implementing a method for initializing a communication session according to Claim 1 when it is loaded and executed by a processor.

SYS

TB

D

TD

S

R

TC

TA

TE

**Figure 1**

TA

MT

μP

TRD    REI

ROM

PG1

RAM

ETL

**Figure 2**

S

UT    μP

RCD    OBL

ROM

PG2

RAM

TRI    DTL

**Figure 3**

CX (SE)    E0

CXA, CXB, CXC, CXD    E2

CP    E4

ENS    E6

IE2    E8

IE2    E10

CN    E12

CXE    E20

CXE    E22

CPE    E24

ENS2    E26

IE2    E28

CN    E30

DXA    E40

DXA    E42

ENS3    E44

IE2    E46

**Figure 4**

E100

CX

CXA, CXB, CXC, CXD — E102

NFA, NFB, NFC, NFD — E104

ENS4 — E106

IE2 — E108

E110

IE2

**Figure 5**

G1

C2

TB

C1

TA

TC

C3

TD

**Figure 6**

G2

C3

TB

TC

C1

C2

TA

C4

D

TD

**Figure 7**

E200 — CX

CXA, CXB, CXC, CXD — E202

NA, NB, NC, ND — E204

ENS5 — E206

IE2 — E208

**Figure 8**

G3

C8

TB → TD

C6

TA

C5

D → TC

C7

**Figure 9**

E52 — RQE

L — E54

RW — E56

RW, IA → BD — E58

ACK — E60

E62 — ACK

**Figure 12**

SY1

SW3

TC

D

SR

TB

SA

SW1

R

TD

TA

SW4

**Figure 10**

**Figure 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120013705 A